# EUROPEAN PATENT SPECIFICATION

(11) **EP 3 183 480 B1**
(45) Date of publication and mention of the grant of the patent: **05.12.2018**
(21) Application number: 15753153.4
(22) Date of filing: 14.08.2015
(51) Int. Cl.: F16J 15/3208, F16F 9/49, F16F 9/36, F16F 9/02

(54) **GAS SPRING**
GASFEDER
RESSORT À GAZ

(30) Priority: 21.08.2014 GB 201414906
(43) Date of publication of application: 28.06.2017
(73) Proprietor: Metrol Springs Limited, Northampton NN3 6QF (GB)
(72) Inventor: HYNES, Paul, Northampton NN3 6QF (GB)
(74) Representative: Banford, Jonathan
(86) International application number: PCT/GB2015/052353
(87) International publication number: WO 2016/027066

(56) References cited:
- EP-A1- 0 427 468
- EP-A1- 0 455 924
- EP-A1- 2 735 759
- EP-A2- 1 113 185

## Description

The invention relates to gas springs, particularly to gas springs that have a secondary chamber for an assisted start or for rebound cushioning.

A conventional gas spring has a chamber filled with a compressible gas and a piston which can slide into and out of the chamber while maintaining a seal such that the gas within the chamber does not leak out. The piston is actionable from the outside. At rest, the piston is in an extended position in which it extends to its maximum extent out from the main body of the gas spring. The piston occupies a minimum volume within the gas chamber and thus the gas pressure within the chamber is at a minimum. When the piston as actuated (i.e. biased into the main body towards a retracted position), the piston projects into the gas chamber, reducing the volume of the gas chamber and correspondingly increasing the gas pressure within the chamber. As the gas pressure increases, the resistance to further piston movement into the chamber increases. When external force is removed from the piston, the compressed gas within the chamber urges the piston from its retracted position back to its extended position, thus minimizing the gas pressure within the chamber once again.

The gas pressure within the chamber when the piston is fully extended (i.e. when the gas pressure is minimized) determines the preload of the gas spring. This is the minimum force that must be applied to the piston before any piston movement occurs. The preload can be varied depending on the particular use of the gas spring

EP 2 735 759 A1 discloses a gas spring having all the features of the preamble of claim 1. In some modifications, such as that shown in EP 1113185, a secondary chamber is formed in the gas spring. When the piston is in the fully retracted state (i.e. extending maximally into the main chamber, the main chamber and the secondary chamber are in fluid communication, essentially forming a single chamber. As the piston extends back towards the fully extended state, at some point of extension the piston seals the secondary chamber from the main chamber such that they are no longer in fluid communication. At this point, the main chamber is on one side of the piston, biasing it towards the extended state, while the secondary chamber is on the opposite side of the piston, biasing it towards the retracted state. At the moment of separation of the two chambers, the pressure in both chambers is equal, but the secondary chamber acts on a smaller surface area of the piston than the main chamber. Thus there is still a net force on the piston biasing it towards the extended position. As the piston continues towards the extended position, the pressure in the main chamber drops while the pressure in the secondary chamber increases (typically much more rapidly due to its smaller volume) until either an equilibrium is reached or the piston reaches its stop at the maximally extended position.

The secondary chamber has two main benefits. First it acts to decelerate the piston as it moves towards the extended position, thus reducing the impact force as it hits the stop and thereby also decreasing the operational noise and vibration associated with that impact. Secondly, the pressure in the secondary chamber reduces the preload of the gas spring. Thus, as the piston is once again depressed towards the retracted position, the initial force required to begin movement of the piston is reduced. The pressure within the secondary chamber assists the external force depressing the piston, the level of assistance progressively decreasing as the piston is extended up to the point at which the seal between the main and secondary chambers ceases to separate them. At this point the gas spring operates in exactly the same way as a normal gas spring with a main chamber volume equal to the sum of the main and secondary chamber volumes.

The reduction in vibration can result in less movement of work pieces in a pressing or stamping operation. This in turn can lead to fewer errors in production lines involving robots for transfer of work pieces from one station to the next. Vibrations can cause movement and misalignment of the work piece leading to failure of the robot to correctly pick up and transfer the piece.

The reduction in noise is an important consideration from an environmental point of view. Factories involving sheet metal pressing and stamping operations can be very noisy. Where land space is limited, industrial and residential buildings are becoming ever closer which can lead to problems with noise levels, potentially requiring factory work to cease during the evening and/or night. Therefore the reduction of noise levels to facilitate continued operation allows improved efficiency and higher throughput.

The assisted start provided by the secondary chamber also finds particular benefit in pressing / stamping machinery. In a typical mechanical press, the ram is driven towards the lower die part using an eccentric drive mechanism which does not produce a constant force throughout its stroke. A clamp ring is typically provided to hold the material in place during the press / stamp operation and gas springs are typically provided under the clamp ring to absorb and cushion some of the impact from the ram engaging the clamp ring. The gas springs therefore produce a counteracting force on the ram. The point of impact between the ram and clamp ring is typically at a point within the stroke where the eccentric drive mechanism has lower leverage (higher leverage being applied towards the bottom dead centre position for the actual pressing and/or stamping part of the stroke) and thus a high force from the gas spring can result in high wear and/or damage to the drive mechanism. Reducing the initial impact force of the gas spring can lessen this wear and lead to longer service life and reduced maintenance.

According to a first aspect of the invention there is provided a gas spring comprising: a housing; and a piston assembly that can reciprocate within the housing; wherein a gas chamber is formed within the housing; wherein at a certain range of positions, the piston assembly separates the gas chamber into a primary chamber and a secondary chamber sealed from on another by a seal, while at other positions the primary chamber and secondary chamber are fluidly joined; and wherein the seal is a captive seal comprising a compressible seal member held captive in the axial direction of piston reciprocation within a seal housing that exposes the seal member in a radial direction through a gap in the seal housing characterised in that the gap is smaller than the seal member.

In use, the piston reciprocates between an extended position and a retracted position. In the extended position, the piston extends partially out from the housing and provides an operational surface for interaction of the gas spring with other machinery. In the retracted position, the piston is partially retracted into the housing, thus compressing the gas therein and experiencing an increased pressure that biases it towards the extended position. The piston can of course take any position intermediate between its maximally extended and maximally retracted positions.

The use of a captive seal to seal the primary chamber form the secondary chamber provides a much improved seal that lasts longer. A simple O-ring mounted in a groove suffers from the repeated engagements and disengagements that occur as the piston reciprocates between extended and retracted positions. During such reciprocations, the primary and secondary chambers are repeatedly sealed from one another and fluidly joined again. In the case of a simple O-ring, these repeated engagements and disengagements wear the O-ring rapidly as well as having a tendency to tear the seal from its seat, thus breaking the seal and further damaging the O-ring.

The seal between the primary and secondary chambers is important to the functioning of the gas spring. If the secondary chamber is not properly isolated from the primary chamber then gas will leak from the secondary chamber back into the primary chamber and the absorptive and assistive functions of the gas spring will be compromised.

The secondary chamber is normally smaller than the primary chamber as it is only required to provide a relatively small cushioning force on piston extension and assistive force on piston retraction (small in relation to the main biasing force provided by the whole chamber (primary and secondary combined) at full piston retraction. The range of piston positions at which the primary and secondary chambers are sealed from one another is generally the piston positions from a fully extended position (with a piston head of the piston assembly typically resting against a stop within the housing) to a partially retracted position. As will be discussed further below, the size of the range determines the length over which an assistive force is provided and thus is an important characteristic of the gas spring.

The captive seal comprises a compressible seal member held captive in the axial direction of piston reciprocation within a seal housing that exposes the seal member in a radial direction through a gap in the seal housing that is smaller than the seal member. In this arrangement, the seal housing essentially defines a C-shaped cross-section with the gap of the C-shape opening in a radial direction and the rest of the C-shape surrounding the seal member to such an extent that the gap is smaller than the seal member. This prevents the seal member form easily being ripped free from the seal housing by the repeated engagement and disengagement of the seal member during piston reciprocation. The gap allows the seal member to project through the gap from the interior of the seal housing so as to allow engagement against a sealing surface. However, as the gap is smaller than the seal member, the seal member is retained within the seal housing. As the seal member engages with the opposed sealing surface, the seal member is compressed and deforms inside the seal housing. Thus the seal housing needs to provide sufficient space to allow this deformation while still ensuring that the seal member is adequately biased out through the gap that it forms a good seal.

The gap may face radially inwardly or radially outwardly. In the former case, the seal housing is mounted to (or integrally formed with) the gas spring main housing, with the seal member projecting radially in towards the piston shaft. In the latter case, the seal housing is mounted to (or integrally formed with) the piston shaft with the seal member projecting radially out towards the housing. The latter arrangement is preferred in some embodiments for ease of mounting and/or replacing the seal member and/or seal housing.

The seal housing may be formed in a number of different ways. However, in some preferred embodiments, the seal housing comprises a first part and a second part positioned on opposite axial sides of the captive seal member. The term "axial" is used here with reference to the axis of the gas spring, e.g. the axis along which the piston reciprocates. Forming the seal housing from two parts, one either side of the seal member, allows the seal housing to be assembled with the seal member inside so that the gap can be made smaller than the seal member. The two parts may be considered as a seal part and a seal cap or lid part.

The seal member may take any suitable form so long as it is capable of forming a good enough seal between the primary and secondary chambers. However, in one particularly preferred form, the compressible seal member comprises a first part with a surface for making sealing contact through said gap and a second part which is resiliently deformable and in contact with the first part so as to bias said first part in the direction of making sealing contact. This two part construction allows different materials to be used for the sealing contact surface and the biasing part. The first part (sealing contact part) may have a concave surface on the reverse of the sealing contact side for interfacing with the second part (resiliently deformable part). The first part can be formed from a material selected to provide optimum sealing performance and resistance to repeated engagement and disengagement, while the second part can be formed from a material with optimum resiliency for biasing the first part against an opposing sealing surface and forming a tight seal. In some preferred embodiments the sealing contact part may formed from polyurethane or a carbon filled PTFE. The resiliently deformable biasing part may be a standard nitrile O-ring.

In use, once the secondary chamber has been sealed off from the primary chamber during an extension stroke of the piston assembly, gas within the secondary chamber is then compressed by further movement of the piston assembly. The gas is compressed by a compression surface on the piston assembly moving in the axial direction so as to gradually reduce the volume of the secondary chamber. Thus the piston assembly preferably comprises a secondary compression component removably mounted around a piston shaft of said piston assembly and with a surface that faces into the secondary chamber when it is sealed off from the primary chamber, and wherein a second seal is provided between the secondary compression component and the piston shaft. By making the secondary compression component removable from the piston, it becomes possible to replace the secondary compression component with one of a different size, or to select an appropriately sized component upon initial assembly. If the component is not formed as a removable component then a different piston assembly is required for each desired size of secondary compression component. Where several different sizes are required for different purposes, this requires manufacturing several different piston assemblies rather than just several different size secondary compression components. However, when the secondary compression component is made removable, an additional gas path is formed between the secondary compression component and the rest of the piston assembly. Therefore an additional seal needs to be provided to avoid gas leakage. The seal can be formed on the piston or on the seal housing.

Compared with the seal that repeatedly engages and disengages upon reciprocation, this additional seal is in a relatively static position, with its opposed sealing surface remaining in contact with the seal material at all times. However, it has been found that this seal is not entirely static and the limited movement that does occur can cause wear and disruption of the seal over time in the case where the seal is a simple O-ring. Therefore preferably the second seal comprises a substantially rectangular block of sealing material mounted in a groove. This rectangular block of sealing material essentially acts as a dual seal; under gas pressure from both sides, the seal material makes contact with the opposed sealing surface over a significant distance, or sometimes it makes contact in two places (e.g. forming a figure-of-eight cross section). In this respect, it functions similarly to a double O-ring arrangement (e.g. a primary O-ring and a back-up O-ring) and therefore provides a more reliable seal. Additionally, the shape of the seal makes it less likely to be broken down over time, so it lasts longer. In some embodiments the second seal may be formed from a polyurethane or a carbon filled PTFE, although other suitable materials may also be used.

The secondary compression component may be a separate component in its own right. This will certainly be the case in embodiments where the captive seal is provided on the housing with the captive seal member sealing against the piston shaft. However, it is preferred that the captive seal housing forms a secondary compression component removably mounted around a piston shaft of said piston assembly and with a surface that faces into the secondary chamber when it is sealed off from the primary chamber, and wherein a second seal is provided between the captive seal housing and the piston shaft. Thus the captive seal housing forms the secondary compression component.

The secondary compression component is preferably held in place between a piston head of said piston assembly and a retaining clip, wherein the piston head and retaining clip are each fixed to the piston shaft. As the secondary compression component is removable, the retaining clip is also removable, but holds the secondary compression component in position during operation, thus minimizing movement relative to the piston shaft and thus minimizing relative movement of the second seal.

The gas spring preferably comprises an opposing seal surface for engagement with the captive seal that is chamfered at one end so as to cause gradual engagement and disengagement of the captive seal and opposing seal surface. This reduces the effect of the repeated engagements and disengagements by reducing the impact at each contact. The chamfered edge squeezes the seal from its unsealed position into its sealed position, reducing damage and thus allows increased service life.

One of the characteristics of a gas spring with a secondary compression chamber is the pressure that builds up within the secondary chamber and thus the maximum assistive force that is provided by the secondary chamber when the piston undergoes retraction. This is defined by a combination of the length over which compression occurs and the final volume of the secondary chamber.

In order to provide the appropriate size and shape for the sealing surfaces and secondary chamber, the gas spring preferably comprises a sealing insert that is mounted inside the housing and which forms the secondary chamber therein. The sealing insert can be inserted into the housing after the piston assembly (including piston head) has been inserted and with suitable seals for sealing against the piston shaft. As the sealing insert is removable, it can also be replaced readily so as to customize the size of the secondary chamber. Once mounted, the sealing insert is fixed in place by retaining clips or other fixing structures. The sealing insert may provide an opposing seal surface for engagement with the captive seal, being chamfered at one end so as to cause gradual engagement and disengagement of the captive seal and opposing seal surface as discussed above.

The gas spring preferably further comprising a one way gas valve arranged to connect from said primary chamber to said secondary chamber when they are sealed from each other. As the secondary chamber is normally sealed from the primary chamber during the initial pressurization of the gas spring, the one way valve provides a passage for the pressure in secondary chamber to be raised to the same pressure as the primary chamber. The one way valve is only used upon the first pressurization. After that, the pressure in secondary chamber is always equal to or greater than that of the primary chamber. The one way gas valve could be formed in the housing or in the sealing insert (if used), but preferably the one way gas valve is provided in a piston shaft of said piston assembly as this makes manufacturing simpler.

According to another aspect, the invention provides a method of making a gas spring comprising: providing a housing; mounting a piston assembly in said housing such that it can reciprocate at least partially within the housing; wherein a gas chamber is formed within said housing; mounting a captive seal within said housing such that at a certain range of positions of said piston assembly, the piston assembly separates the gas chamber into a primary chamber and a secondary chamber sealed from one another by a seal, while at other positions the primary chamber and secondary chamber are fluidly joined; characterised in that the captive seal comprises a compressible seal member held captive in the axial direction of piston reciprocation within a seal housing that exposes the seal member in a radial direction through a gap in the seal housing that is smaller than the seal member.

All of the preferred features described above in relation to the apparatus also apply to the method of manufacture.

Certain preferred embodiments of the invention will now be described, by way of example only, and with reference to the accompanying drawings in which:
Fig. 1 shows an embodiment of a gas spring with the piston partially retracted;
Fig. 2 shows an embodiment of a gas spring with the piston fully extended;
Figs. 3A-3C show different embodiments of gas springs with different secondary compression lengths;
Fig. 4 shows a detail of a sealing arrangement; and
Fig. 5 shows heat dissipation structures.

Gas Springs have been used in press tools for many years. However, some older presses struggle with the initial force of the springs being transmitting through to the crank when it is still at a shallow angle and has not had time to fully engage. This constant force causes parts of the press to fatigue and break leading to loss of production and high maintenance costs. The speed and sudden stopping of the returning spring can also cause the pressed panel to jump and then come to rest in the incorrect position for automated production line robots to be able to correctly collect the part and transfer it to the next station. By reducing the impact forces on the return stroke, this jumping problem can be alleviated. At the same time the noise produced is greatly reduced creating a much better working environment.

The embodiments described below vastly reduce or eliminate these potential issues. The gas spring basically works by trapping gas in a secondary chamber towards the end of the returning stroke. This trapped gas continues to be compressed to a greater pressure than the main chamber. This compressed gas acts as a force pushing down on the piston, thus reducing the initial force needed by the press to start the piston moving, and thereby reducing the force on the mechanical parts of the press. On the return of the piston after a cycle the process of trapping and compressing the gas slows the speed of the piston, allowing a soft return in the final part of the stroke. Reducing the inertia of the returning tool stops the pressed panel from 'jumping' out of position as well as reducing the impact noise.

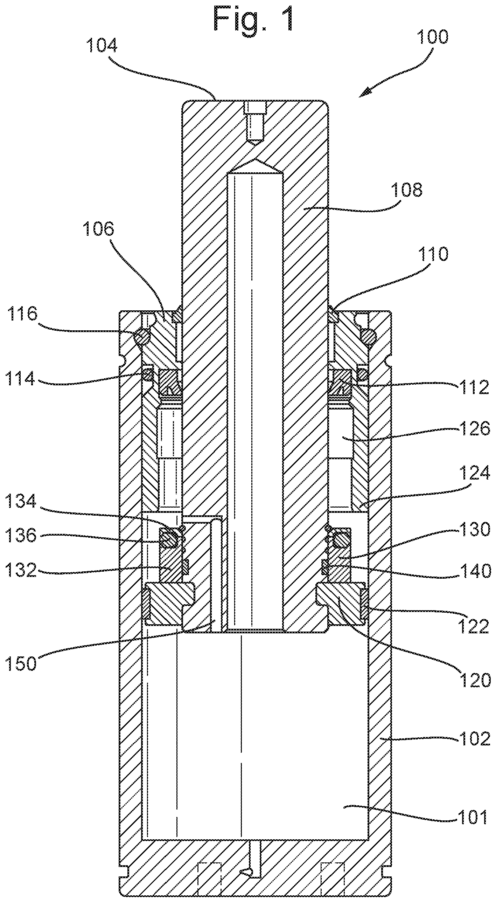

Fig. 1 shows a gas spring 100 comprising a cylindrical main body housing 102 and a piston 104 that can reciprocate within the housing 102. The housing 102 is open at one axial end to receive the piston 104 and is closed at the opposite axial end. A main chamber 101 is formed in the housing 102 adjacent to the closed end of housing 102. A seal unit (seal insert) 106 is mounted inside the housing 102 and seals between the housing 102 and the shaft 108 of piston 104. The seal unit 106 together with various seals mounted thereon (including U-cup seal 112 and O-ring 114) prevents the escape of high pressure gas from within the main body housing 102. Piston wiper 110 prevents contaminants from entering the spring body and damaging the seals. The O-ring 114 is a static seal between the seal unit 106 and the housing 102. The piston wiper 110 and lip seal 112 are dynamic seals that seal against the moving piston shaft 108 as it moves between extended and retracted positions.

A piston ring 120 is mounted at the end of piston shaft 108 with a guide ring 122 mounted in its outer diameter for contact with the inner diameter of the housing 102. Piston ring 120 is a split ring that permits gas to pass from one side of the ring 120 to the other side of the ring 120 along the axial direction of the gas spring 100. Therefore in use the gas pressure can equalize across the piston ring 120.

Seal unit 106 fits into the open end of housing 102, but does not extend the full length of the cylindrical bore of housing 102. Instead, seal unit 106 only extends partially along the length of the bore. Seal unit 106 is held axially in place by retaining clip 116 near the open end of housing 102. The end 124 of seal unit 106 forms a stop against which the piston ring 120 rests, defining the maximally extended position of piston 104. Seal unit 106 forms a secondary chamber 126 of smaller diameter than the inner diameter of the housing 102 and that is formed by the inner diameter of the seal unit 106, the outer diameter of the piston shaft 106 and the seal 112. When the piston 104 is in a fully retracted position, the secondary chamber 126 is open for fluid communication with the rest of the main chamber 101 of housing 102. When the piston 104 is in a fully extended position, secondary chamber 126 is sealed off from the rest of the main chamber 101, the remainder of the main chamber 101 thus forming a primary chamber.

The main chamber 101 is fully sealed from the outside of the housing, thus maintaining the pressure within the gas spring 100. Thus both the primary chamber and secondary chamber 126 are also fully sealed from the outside of gas spring 100.

A seal 130 is mounted on the piston shaft 108 behind the piston ring 120 (i.e. on the side closest to the open end of housing 102). The seal 130 fully surrounds the circumference of the piston in use. Seal 130 is radially sized for sealing engagement with the inner diameter of seal unit 106, i.e. it has an external diameter that, when slid inside the seal unit 106 mates with the inner diameter of seal unit 106 so as to form a seal therebetween. The axial length of seal 130 may be selected based on the desired size of secondary chamber 126 when the piston 104 is in its fully extended position. This will be discussed in more detail below.

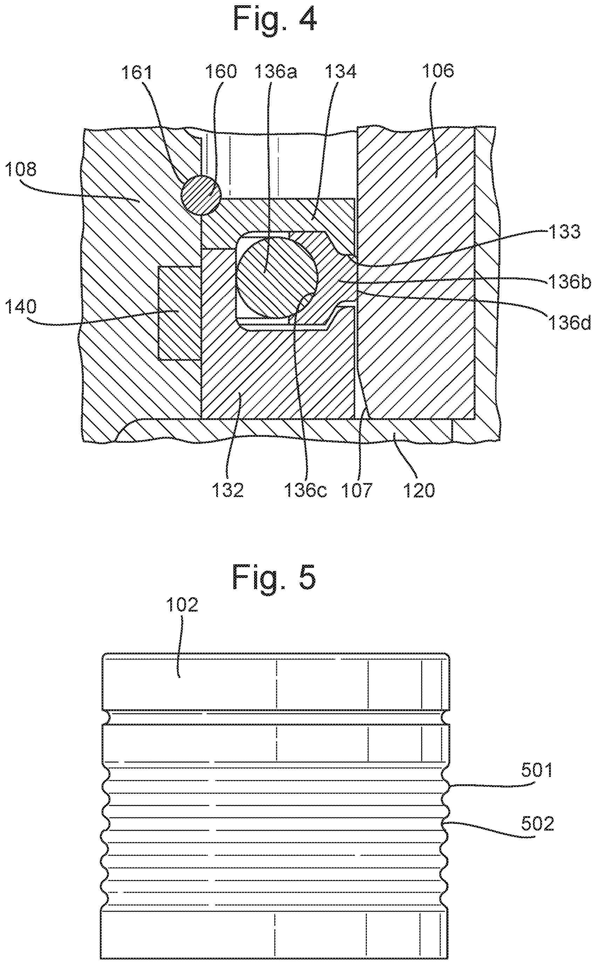

Seal 130 is a retained seal structure (also called a captive seal structure) comprising a seal housing base or seat 132, a seal housing cap or lid 134 and a captive seal 136 held between the base 132 and cap 134. This structure is shown in greater detail in Fig. 4. Fig. 4 is a cross-section through the piston shaft 108 and seal assembly. The captive seal 136 is circular and extends fully around the cylindrical piston shaft 108 so as to seal fully around the piston 104. The seal seat 132 and cap 134 together form a C-shaped cross section with a gap 133 that faces in a radially outward direction, opening towards seal insert 106. The gap 133 is narrower than the seal unit 136 so that captive seal 136 cannot easily be dislodged from within its seal housing. The captive seal 136 as formed from two parts: a resilient biasing part such as an O-ring (e.g. a nitrile O-ring) 136a and a seal contact part 136b that makes the sealing contact with seal insert 106 so as to prevent gas escape between these two surfaces. The seal contact part 136b has a concave surface 136c on its radially inner surface which receives and engages with biasing part 136a such that the biasing part 136a biases contact part 136 in a radially outward direction to press against sealing insert unit 106. Sealing part 136b also has a protruding part that projects out through gap 133 to engage with seal insert 106. Second seal 140 is formed behind the seal base 132 in a groove in piston shaft 108. Second seal 140 is a rectangular block that is resistant to small movements between the seal seat 132 and piston shaft 108 and thus maintains its seal. Seal housing parts 132, 134 are held axially in place by circlip 160 seated in groove 161 and piston head 120. Seal unit 106 is mounted inside housing 102 and has a chamfered edge 107 at its lower end where the seal part 136b engages and disengages from seal unit 106 during piston reciprocation. The chamfer 107 causes gradual engagement and disengagement of seal part 136b, thus reducing the impact and consequent wear.

During a retraction stroke (from an extended position towards a retracted position), at a certain length of retraction the seal 130 breaks free from the seal unit 106 and the secondary chamber 126 is no longer sealed from the main chamber 101. Likewise during an extension stroke (from a retracted position towards an extended position), at a certain position of retraction (or equivalently a certain position of extension) the seal 130 engages with the inner diameter of seal unit 106 and seals the secondary chamber 126 from the primary chamber (the rest of the main chamber 101).

Fig. 1 shows the gas spring 100 with the piston 104 in a partially retracted configuration, sufficiently retracted that the seal 130 has disengaged from seal unit 106 and the secondary chamber 126 is in fluid communication with the main chamber 101, i.e. the secondary chamber 126 and chamber 101 act like a single chamber. Further retraction of the piston 104 from the position shown in Fig. 1 results in operation exactly like that of a conventional gas spring. Likewise, extension of the piston 104 from the position show in Fig. 1 is exactly like a conventional gas spring up to the point at which the seal 130 engages with the seal unit 106, thus sealing the secondary chamber 126 from the rest of main chamber 101. From this point, as the piston 104 extends further, the gas that is now trapped within secondary chamber 126 is compressed as the volume of secondary chamber 126 is reduced and the pressure therein rises. Meanwhile, the volume of the primary chamber increases and the pressure of the gas therein drops. Thus the pressure difference across the seal 130 increases. Correspondingly, a force develops in the direction of retraction, acting on the surface of seal 130 that faces the secondary chamber 126. This forces acts against (in the opposite direction to) the main extension force that is applied by the pressurized gas in main chamber 101 on the axial end of piston shaft 108 inside chamber 101 and therefore decelerates the piston 104.

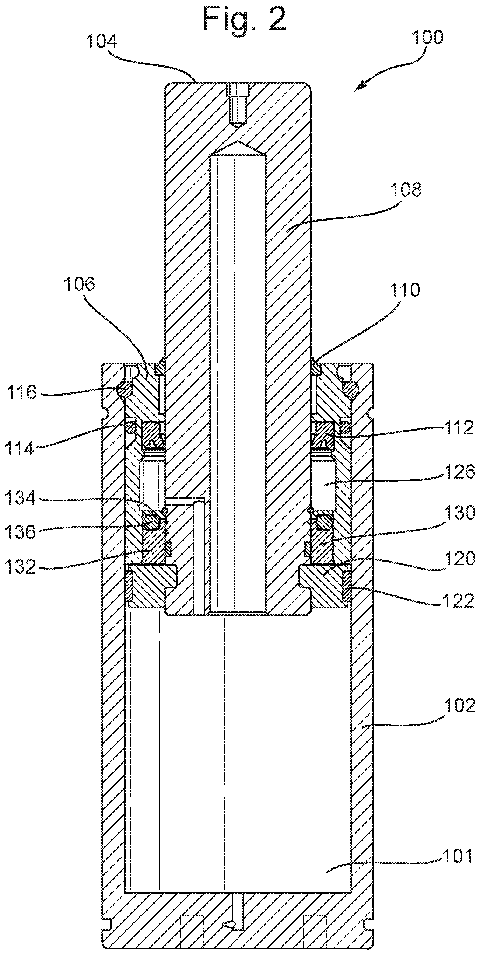

As the piston 104 extends beyond the sealing point of seal 130, secondary chamber 126 continues to decrease in volume until the piston ring 120 comes into contact with the end 124 of seal unit 106 and further extension ceases. At this point the secondary chamber 126 has reached is minimum volume, the gas therein has reached its maximum pressure and the force applied by that pressurized gas has reached its maximum. Fig. 2 shows the gas spring 100 in this state.

When an external force is applied to piston 104 in the direction of piston retraction, the force required to initiate movement of the piston 104 is decreased compared to a conventional single chamber gas spring by the assistive force being applied by the pressurized gas in the secondary chamber 126. As the piston 104 begins to move, the volume of secondary chamber 126 increases, the gas pressure in secondary chamber 126 decreases, the volume of main chamber 101 decreases, the pressure in main chamber 101 increases and the pressure difference across the seal 130 decreases. Therefore the assistive force decreases up to the point at which seal 130 is about to break contact with seal unit 106. At this point, the pressures in secondary chamber 126 and main chamber 101 have equalized and the gas spring 100 operates as a conventional single chamber gas spring.

As can be appreciated from the above, the secondary chamber formed by secondary chamber 126 and seal 130 firstly acts to decelerate the piston 104 towards the end of the extension stroke (thus reducing the impact force and the corresponding noise and vibration) and secondly decreases the force required to retract the piston to the break point of seal 130 and seal unit 106 (thus reducing back-forces on the object or machinery that is pushing the piston).

For efficient operation of the gas spring 100, it is very important that the gas seal between the main chamber 101 and the secondary chamber 126 prevents gas flow from the secondary chamber 126 to the main chamber 101 so that the secondary chamber 126 retains its increased pressure. There are two important parts to this seal. Firstly, seal 130 seals against the inside of seal unit 106. Secondly, seal 140 seals between the retaining housing 132 of seal 130 and the piston shaft 108. Together these seals prevent gas flow between the secondary chamber 126 and the main chamber 101. The seal 130 is a dynamic seal that slides with respect to seal unit 106 as the piston 104 moves. The seal 140 is a generally static seal that seals between two surfaces which experience very little relative movement during normal use.

The dynamic nature of the seal against seal unit 106 requires a high level of robustness. A simple arrangement of an O-ring in a groove will not stand up to the constant friction as the piston 104 moves in and out of housing 102. Such an O-ring will quickly become dislodged from the groove and the seal will be broken.

To form a good seal, the seal 130 must have an outer diameter at rest greater than the inner diameter of seal unit 106 so that the seal 130 compresses upon engagement with seal unit 106. However, the frequent engagement and disengagement with seal unit 106 means that seal 130 experiences repeated high speed impacts which must be resisted without being damaged or becoming unseated. It has been found that a simple O-ring in a groove is not sufficient as it can be ripped free of the groove. Instead, captive seal 136 is retained by seat 132 and lid 134 such that it cannot break free.

To increase the robustness, seal 130 includes a captive or retained seal structure comprising a seal seat 132 and a seal lid 134 that partially surround an O-ring 136. The seat 132 and lid 134 surround the O-ring 136 to such an extent that the O-ring is enclosed around more than half of its circumference. Thus the O-ring 136 cannot easily be dislodged from this retaining structure. The structure captures the O-ring 136 to such an extent that the O-ring cannot squeeze in and out of its seat, but rather the seat 132 and lid 134 must be separated in order to insert or remove O-ring 136. Captive seal 136 is retained within a generally C-shaped housing formed by seat 132 and lid 134 such that the open part of the C-shape faces the seal unit 106. Captive seal 136 extends out through the opening of the C-shape so that it can engage with and compress against the inner diameter of seal unit 106.

Captive seal 136 is formed from two parts, namely an outer sealing part 136b with an outwardly facing sealing surface 136d and an inwardly facing concave surface 136c that receives compressible O-ring 136a. Outer sealing part 136b is formed from a material that has a good resistance to impacts as it engages and disengages from seal unit 106, but also forms a good sealing interface against seal unit 106. Polyurethane is one suitable material, but many others are also suitable, including various PTFE materials (including carbon-filled PTFE). Outer sealing part 136b is typically not very compressible. Instead, the compressibility of captive seal 136 comes from the O-ring 136a which energises (i.e. biases) outer seal part 136b to press against seal unit 106. When the outer seal part 136b engages with seal unit 106, O-ring 136a is compressed into an oval shape inside seat 132 and cap 134.

In some embodiments the seal seat 132 may be integrally formed with the piston shaft 108 or it may be a separate component but be welded or otherwise immovably and sealably fixed to the piston shaft 108 such that gas may not escape between the seal seat 132 and the piston shaft 108. However, in other embodiments the seal seat 132 is a separate component which is removably mounted to piston shaft 108. As shown in Figs. 1-3, the seal seat 132 sits snugly against piston shaft 108, but is not affixed thereto. Seal seat 132 also abuts piston head 120 and is held securely against piston head 120 by circlip 160. In order to prevent gas from escaping from cavity 126 between seal seat 132 and piston shaft 108, seal 140 is provided on piston shaft 108. Although the seal seat 132 and piston shaft 108 experience very little relative movement, the small amount that there is would cause an O-ring seal to be disrupted and to break down, allowing gas to escape. Therefore seal 140 is a dual seal which can withstand the slight movements between the components 132, 108. Seal 140 is typically made from polyurethane, although again other materials are also suitable. The seal 140 is compressed by the high pressure gas on either side and deforms into approximately a figure of eight shape with two points of contact on the outer diameter of piston shaft 108 and two points of contact on the inner diameter of seal seat 132. This dual seal 140 provides a rigid seal structure that does not break down rapidly in use and thus maintains the seal across piston head 120 and prevents gas from escaping from secondary chamber 126.

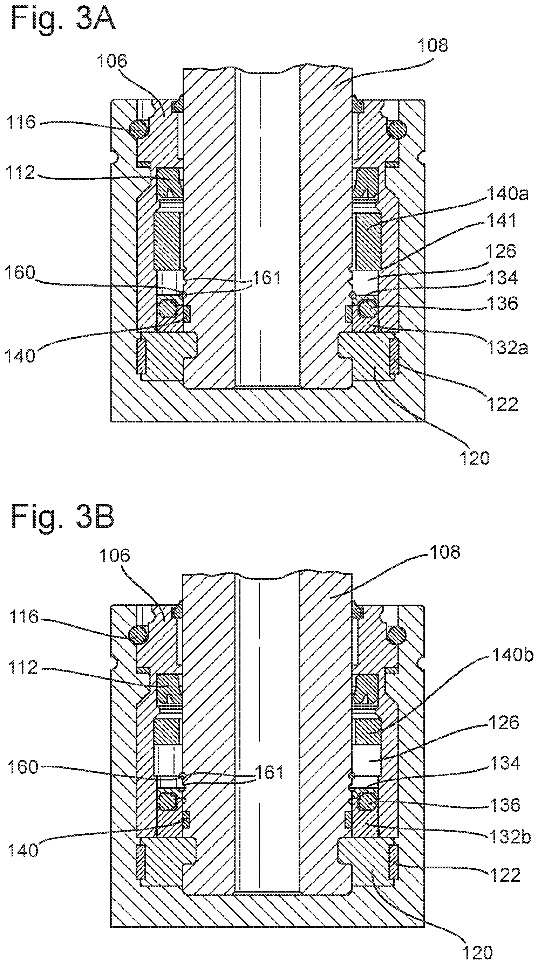

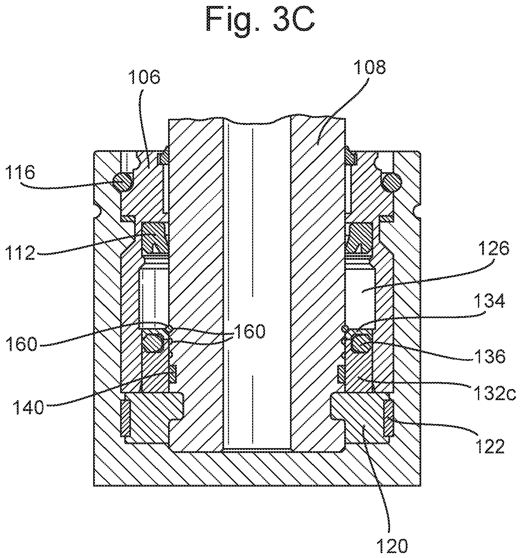

The advantage of forming seal seat 132 as a separate component is that it allows the distance over which the secondary chamber 126 provides assistive force to be varied by replacing the seal seat 132 with a component of a different length. This alters the distance over which the gas in secondary chamber 126 is compressed. A shorter seal seat 132 will result in a shorter distance of travel between the point at which seal 130 engages with seal unit 106 (and thus separates secondary chamber 126 from the rest of main chamber 101) and the fully extended position in which piston head 120 contacts seal unit 106. This is illustrated in Figs. 3A, 3B and 3C. Fig. 3A shows an embodiment in which the seal seat 132a is 10 mm in length, Fig. 3B shows an embodiment in which the seal seat 132b is 15 mm in length and Fig. 3C shows an embodiment in which the seal seat 132c is 20 mm in length. As can be seen in Figs. 3A-3C, circlip 160 can be mounted in any of a number (3 shown) of pre-formed grooves 161 in the piston shaft 108. These plurality of grooves 161 match a corresponding plurality of lengths of seal 130 (seal seat 132 combined with seal cap 134).

As the compression length of secondary chamber 126 varies between Figs. 3A, 3B and 3C, the compression characteristics of secondary chamber 126 vary. For example, in the absence of any other changes, a longer compression length would result in a higher pressure within secondary chamber 126. However, the amount of assistive force provided by the pressure in secondary chamber 126 affects the spring's characteristics. To be able to control the strength of this force as well as the compression length, a volume reducing spacer 140a (in Fig. 3A) is provided in secondary chamber 126 so as to reduce its volume. A different sized volume reducing spacer 140b is shown in Fig. 3B and no volume reducing spacer is required in the embodiment shown in Fig. 3C. The size of the spacer is calculated based on the length over which compression will take place (defined by the size of seal unit 132 and the target pressure in secondary chamber 126 at maximum compression. Thus, by carefully selecting the size of these components, the properties of the gas spring can be altered as desired.

Seal seat 132 is held in place by circlip 160. Spacer 140 is formed as a split ring so that it can be temporarily (resiliently) deformed to fit inside seal unit 106, whereupon it springs back and rests upon a shoulder 141 formed in the radially inner wall of seal unit 106. When installed, the inner diameter of spacer 140 is larger than the outer diameter of the piston shaft 108 so as not to add any resistance thereto.

As the seal seat 132 and volume reducing spacer 140 are formed as separate components which can be easily inserted (and removed and replaced if necessary or if desired), the gas spring 100 is readily customizable according to a customer's needs. The customer can request a particular assistive force and a particular assistive length for the gas spring and this can be accommodated by inserting a seal seat 132 and spacer 140 of appropriate size. This reduces the manufacturing cost of the gas spring 100 as the majority of components are the same regardless of these end characteristics. In one example, the customer can choose between an assistive length of 10 mm, 15 mm or 20 mm. These options can be accommodated by providing a seal unit 130 with a length of 10 mm, 15 mm or 20 mm respectively. Each of these seal units is then paired with an appropriate volume reducing spacer (if required) to ensure that the correct pressure is produced in secondary chamber 126.

Although the assembly will often take place in the factory, a kit of parts may be provided including a selection of seal units 130 and a selection of volume reducing spacers 140 of different lengths such that a customization operation can take place at a later stage.

A one way valve 150 is provided in the piston shaft 108, connecting the primary chamber to the secondary chamber 126 while these chambers are otherwise sealingly separated from one another. The one way valve 150 permits gas flow from primary chamber to secondary chamber, but not the other way. Thus a higher pressure may be maintained in secondary chamber 126. This enables both chambers to be charged to the same pressure initially. Without this valve 150 the pressure would either damage the captive seal 136 which may in turn cause the gas spring to lose pressure after its first stroke due to the increased volume provided by secondary chamber 126. Once both chambers are initially charged with the valve 150, both chambers will be equal in pressure. Only once the gas spring has been cycled for the first time will the gas spring 100 operate as intended.

Fig. 5 shows an embodiment in which the outside of housing 102 contains a number of ribs 501 and grooves 502 that increase the surface area of the housing 102 for increased heat dissipation. The ribs 501 and grooves 502 are formed adjacent to the secondary chamber (which is inside the housing 102) which is where the highest gas pressures and thus the highest temperatures occur. The improved sealing arrangements provided by the sealing arrangements described above lead to increased operational pressures and increased operational temperatures.

Compared to a standard gas spring which, during operation, reaches temperatures of 40-50°C, an improved gas spring of similar size and characteristics will operate at around 60-70°C. This is just one example; other sizes of spring may operate at higher or lower temperatures. However, the increased heat dissipation can be counteracted by the ribs 501 and grooves 502 formed in the housing 102 as shown in Fig. 5. These heat fins may be turned into the outside diameter of the housing by inexpensive manufacturing techniques.

## Claims

1. A gas spring comprising:
a housing (102); and
a piston assembly (104) that can reciprocate within the housing;
wherein a gas chamber is formed within the housing(104);
wherein at a certain range of positions, the piston assembly (104) separates the gas chamber into a primary chamber (101) and a secondary chamber (126) sealed from one another by a seal (130), while at other positions the primary chamber (101) and secondary chamber (126) are fluidly joined;
and wherein the seal is a captive seal comprising a compressible seal member (136) held captive in the axial direction of piston reciprocation within a seal housing (132,134) that exposes the seal member (136) in a radial direction through a gap (133) in the seal housing (132,134); **characterised in that** the gap is smaller than the seal member (136).

2. A gas spring as claimed in claim 1, wherein the seal housing comprises a first part (132) and a second part (134) positioned on opposite axial sides of the captive seal member (136).

3. A gas spring as claimed in claim 1 or 2, wherein the compressible seal member (136) comprises a first part (136b) with a surface for making sealing contact through said gap (133) and a second part (136a) which is resiliently deformable and in contact with the first part (136b) so as to bias said first part (136b) in the direction of making sealing contact.

4. A gas spring as claimed in claim 3, wherein the first part of said compressible seal member (136) is formed from polyurethane or carbon filled PTFE.

5. A gas spring as claimed in any preceding claim, the piston (104) comprising a secondary compression component removably mounted around a piston shaft of said piston assembly and with a surface that faces into the secondary chamber when it is sealed off from the primary chamber, and wherein a second seal is provided between the secondary compression component and the piston shaft.

6. A gas spring as claimed in claim 5, wherein the second seal comprises a substantially rectangular block of sealing material mounted in a groove.

7. A gas spring as claimed in claim 1, 2, 3, or 4, wherein the captive seal housing (132,134) forms a secondary compression component removably mounted around a piston shaft (108) of said piston assembly and with a surface that faces into the secondary chamber (126) when it is sealed off from the primary chamber (101), and wherein a second seal (140) is provided between the captive seal housing (132,134) and the piston shaft (108).

8. A gas spring as claimed in claim 7, wherein the second seal (140) comprises a substantially rectangular block of sealing material mounted in a groove.

9. A gas spring as claimed in claim 5, 6, 7 or 8, wherein the secondary compression component is held in place between a piston head (120) of said piston assembly (104) and a retaining clip (116), wherein the piston head (120) and retaining clip (116) are each fixed to the piston shaft (108).

10. A gas spring as claimed in any preceding claim, further comprising an opposing seal surface for engagement with the captive seal (130), and wherein the opposing seal surface is chamfered at one end so as to cause gradual engagement and disengagement of the captive seal and opposing seal surface.

11. A gas spring as claimed in any preceding claim, further comprising a sealing insert (106) that is mounted inside the housing (104) and which forms the secondary chamber therein.

12. A gas spring as claimed in claim 11, wherein the sealing insert (106) provides an opposing seal surface for engagement with the captive seal (130), said opposing seal surface being chamfered at one end so as to cause gradual engagement and disengagement of the captive seal (130) and opposing seal surface.

13. A gas spring as claimed in any preceding claim, further comprising a one way gas valve (15) arranged to connect from said primary chamber (101) to said secondary chamber (126) when they are sealed from each other.

14. A gas spring as claimed in claim 13, wherein said one way gas valve (150) is provided in a piston shaft (108) of said piston assembly (104).

15. A method of making a gas spring comprising:
providing a housing (102);
mounting a piston assembly (104) in said housing (102) such that it can reciprocate at least partially within the housing (102);
wherein a gas chamber is formed within said housing (102); and
mounting a captive seal (130) within said housing (102) such that at a certain range of positions of said piston assembly (104), the piston assembly (104) separates the gas chamber into a primary chamber (101) and a secondary chamber (126) sealed from one another by a seal (130), while at other positions the primary chamber (101) and secondary chamber (126) are fluidly joined;
**characterised in that** the captive seal (130) comprises a compressible seal member (136) held captive in the axial direction of piston reciprocation within a seal housing (132, 134) that exposes the seal member (136) in a radial direction through a gap (133) in the seal housing that is smaller than the seal member (136).

## Patentansprüche

1. Gasfeder, umfassend:
ein Gehäuse (102); und
eine Kolbenanordnung (104), die innerhalb des Gehäuses hin- und her bewegbar ist;
wobei eine Gaskammer innerhalb des Gehäuses (104) gebildet ist;
wobei die Kolbenanordnung (104) in einem bestimmten Bereich von Positionen die Gaskammer in eine Primärkammer (101) und eine Sekundärkammer (126) trennt, die durch eine Dichtung (130) voneinander abgedichtet sind, während an anderen Positionen die Primärkammer (101) und die Sekundärkammer (126) fluidisch verbunden sind;
und wobei die Dichtung eine unverlierbare Dichtung ist, die ein kompressibles Dichtungselement (136) umfasst, das in axialer Richtung der Hinundherbewegung des Kolbens innerhalb eines Dichtungsgehäuses (132, 134) unverlierbar gehalten wird, das das Dichtungselement (136) in einer radialen Richtung durch einen Spalt (133) im Dichtungsgehäuse (132, 134) freilegt; **dadurch gekennzeichnet, dass** der Spalt kleiner als das Dichtungselement (136) ist.

2. Gasfeder nach Anspruch 1, wobei das Dichtungsgehäuse einen ersten Abschnitt (132) und einen zweiten Abschnitt (134) umfasst, die auf gegenüberliegenden axialen Seiten des unverlierbaren Dichtungselements (136) angeordnet sind.

3. Gasfeder nach Anspruch 1 oder 2, wobei das kompressible Dichtungselement (136) einen ersten Abschnitt (136b) mit einer Oberfläche zum Herstellen eines Dichtkontakts durch den Spalt (133) und einen zweiten Abschnitt (136a) umfasst, der elastisch verformbar ist und mit dem ersten Abschnitt (136b) in Kontakt steht, um den ersten Abschnitt (136b) in Richtung des Herstellens eines Dichtkontakts vorzuspannen.

4. Gasfeder nach Anspruch 3, wobei der erste Abschnitt des kompressiblen Dichtungselements (136) aus mit Polyurethan oder Kohlenstoff gefülltem PTFE gebildet ist.

5. Gasfeder nach einem der vorhergehenden Ansprüche, wobei der Kolben (104) eine sekundäre Kompressionskomponente umfasst, die abnehmbar um eine Kolbenwelle der Kolbenanordnung herum und mit einer Oberfläche montiert ist, die in die Sekundärkammer zeigt, wenn sie von der Primärkammer abgedichtet ist, und wobei eine zweite Dichtung zwischen der sekundären Kompressionskomponente und der Kolbenwelle bereitgestellt ist.

6. Gasfeder nach Anspruch 5, worin die zweite Dichtung einen im Wesentlichen rechteckigen Block aus Dichtungsmaterial umfasst, der in einer Nut montiert ist.

7. Gasfeder nach Anspruch 1, 2, 3 oder 4, wobei das unverlierbare Dichtungsgehäuse (132, 134) eine sekundäre Kompressionskomponente bildet, die abnehmbar um eine Kolbenwelle (108) der Kolbenanordnung herum und mit einer Oberfläche montiert ist, die in die Sekundärkammer (126) zeigt, wenn sie von der Primärkammer (101) abgedichtet ist, und wobei eine zweite Dichtung (140) zwischen dem unverlierbaren Dichtungsgehäuse (132, 134) und der Kolbenwelle (108) bereitgestellt ist.

8. Gasfeder nach Anspruch 7, wobei die zweite Dichtung (140) einen im Wesentlichen rechteckigen Block aus Dichtungsmaterial umfasst, der in einer Nut montiert ist.

9. Gasfeder nach Anspruch 5, 6, 7 oder 8, wobei die sekundäre Kompressionskomponente zwischen einem Kolbenkopf (120) der Kolbenanordnung (104) und einer Halteklammer (116) an der Stelle gehalten wird, wobei der Kolbenkopf (120) und die Halteklammer (116) jeweils an der Kolbenwelle (108) befestigt sind.

10. Gasfeder nach einem der vorhergehenden Ansprüche, ferner umfassend eine gegenüberliegende Dichtoberfläche zum Eingriff mit der unverlierbaren Dichtung (130), und wobei die gegenüberliegende Dichtoberfläche an einem Ende gefast ist, um einen/ein allmählichen/allmähliches Eingriff und Lösen der unverlierbaren Dichtung und der gegenüberliegenden Dichtoberfläche zu bewirken.

11. Gasfeder nach einem der vorhergehenden Ansprüche, ferner umfassend einen Dichtungseinsatz (106), der innerhalb des Gehäuses (104) montiert ist und die Sekundärkammer darin bildet.

12. Gasfeder nach Anspruch 11, wobei der Dichtungseinsatz (106) eine gegenüberliegende Dichtoberfläche zum Eingriff mit der unverlierbaren Dichtung (130) bereitstellt, wobei die gegenüberliegende Dichtoberfläche an einem Ende gefast ist, um einen/ein allmählichen/allmähliches Eingriff und Lösen der unverlierbaren Dichtung (130) und der gegenüberliegenden Dichtoberfläche zu bewirken.

13. Gasfeder nach einem der vorhergehenden Ansprüche, ferner umfassend ein Einweg-Gasventil (15), das angeordnet ist, um von der Primärkammer (101) zu der Sekundärkammer (126) zu verbinden, wenn sie von einander abgedichtet sind.

14. Gasfeder nach Anspruch 13, wobei das Einweg-Gasventil (150) in einer Kolbenwelle (108) der Kolbenanordnung (104) bereitgestellt ist.

15. Verfahren zur Herstellung einer Gasfeder, umfassend:
Bereitstellen eines Gehäuses (102);
Montieren einer Kolbenanordnung (104) in dem Gehäuse (102), so dass sie zumindest teilweise innerhalb des Gehäuses (102) hin- und herbewegt werden kann;
wobei eine Gaskammer innerhalb des Gehäuses (102) gebildet wird; und
Montieren einer unverlierbaren Dichtung (130) in dem Gehäuse (102), so dass die Kolbenanordnung (104) in einem bestimmten Bereich von Positionen der Kolbenanordnung (104) die Gaskammer in eine Primärkammer (101) und eine Sekundärkammer (126) trennt, die durch eine Dichtung (130) voneinander abgedichtet sind, während an anderen Positionen die Primärkammer (101) und die Sekundärkammer (126) fluidisch verbunden sind;
**dadurch gekennzeichnet, dass** die unverlierbare Dichtung (130) ein kompressibles Dichtungselement (136) umfasst, das in axialer Richtung der Hinundherbewegung des Kolbens innerhalb eines Dichtungsgehäuses (132, 134) unverlierbar gehalten wird, das das Dichtungselement (136) in einer radialen Richtung durch einen Spalt (133) im Dichtungsgehäuse freilegt, der kleiner als das Dichtungselement (136) ist.

## Revendications

1. Ressort à gaz comportant :
un logement (102) ; et
un ensemble piston (104) qui peut effectuer un mouvement de va-et-vient à l'intérieur du logement ;
dans lequel une chambre à gaz est formée à l'intérieur du logement (104) ;
dans lequel sur une certaine plage de positions, l'ensemble piston (104) sépare la chambre à gaz en une chambre primaire (101) et une chambre secondaire (126) fermées avec étanchéité l'une par rapport à l'autre par un joint (130), alors qu'à d'autres positions, la chambre primaire (101) et la chambre secondaire (126) sont jointes de manière fluidique ;
et dans lequel le joint est un joint prisonnier comportant un élément d'étanchéité compressible (136) maintenu prisonnier dans le sens axial du mouvement de va-et-vient du piston à l'intérieur d'un logement de joint (132, 134) qui expose l'élément d'étanchéité (136) dans un sens radial à travers un jour (133) dans le logement de joint (132, 134) ; **caractérisé en ce que** le jour est plus petit que l'élément d'étanchéité (136).

2. Ressort à gaz selon la revendication 1, dans lequel le logement de joint comporte une première partie (132) et une seconde partie (134) positionnées sur les côtés axiaux opposés de l'élément d'étanchéité prisonnier (136).

3. Ressort à gaz selon la revendication 1 ou 2, dans lequel l'élément d'étanchéité compressible (136) comporte une première partie (136b) dotée d'une surface interne permettant une mise en contact étanche à travers ledit jour (133) et une seconde partie (136a) qui est déformable de manière résiliente et vient en contact avec la première partie (136b) de façon à solliciter ladite première partie (136b) dans le sens de la mise en contact étanche.

4. Ressort à gaz selon la revendication 3, dans lequel la première partie dudit élément d'étanchéité compressible (136) est formée en polyuréthane ou en PTFE rempli de carbone.

5. Ressort à gaz selon l'une quelconque des revendications précédentes, le piston (104) comportant un élément de compression secondaire monté de manière amovible autour d'un arbre de piston dudit ensemble piston et doté d'une surface qui est orientée dans la chambre secondaire lorsqu'elle est fermée avec étanchéité par rapport à la chambre primaire, et dans lequel un second joint est fourni entre le composant de compression secondaire et l'arbre de piston.

6. Ressort à gaz selon la revendication 5, dans lequel le second joint comporte un bloc de matériau d'étanchéité sensiblement rectangulaire, monté dans une rainure.

7. Ressort à gaz selon la revendication 1, 2, 3, ou 4, dans lequel le logement de joint prisonnier (132, 134) forme un composant de compression secondaire monté de manière amovible autour d'un arbre de piston (108) dudit ensemble piston et doté d'une surface qui est orientée dans la chambre secondaire (126) lorsqu'elle est fermée avec étanchéité par rapport à la chambre primaire (101), et dans lequel un second joint (140) est fourni entre le logement de joint prisonnier (132, 134) et l'arbre de piston (108).

8. Ressort à gaz selon la revendication 7, dans lequel le second joint (140) comporte un bloc de matériau d'étanchéité sensiblement rectangulaire, monté dans une rainure.

9. Ressort à gaz selon la revendication 5, 6, 7 ou 8, dans lequel le composant de compression secondaire est maintenu en place entre la tête de piston (120) dudit ensemble piston (104) et une pince de retenue (116), la tête de piston (120) et la pince de retenue (116) étant chacune fixée à l'arbre de piston (108).

10. Ressort à gaz selon l'une quelconque des revendications précédentes, comportant en outre une surface de joint opposée destinée à se mettre en prise avec le joint prisonnier (130), et dans lequel la surface de joint opposée est chanfreinée au niveau d'une extrémité de façon à entraîner une mise en prise et une libération graduelles du joint prisonnier et de la surface de joint opposée.

11. Ressort à gaz selon l'une quelconque des revendications précédentes, comportant en outre un élément d'insertion d'étanchéité (106) qui est monté à l'intérieur du logement (104) et qui forme la chambre secondaire à l'intérieur de celui-ci.

12. Ressort à gaz selon la revendication 11, dans lequel l'élément d'insertion d'étanchéité (106) fournit une surface de joint opposée destinée à se mettre en prise avec le joint prisonnier (130), ladite surface de joint opposée étant chanfreinée au niveau d'une extrémité de façon à entraîner une mise en prise et une libération graduelles du joint prisonnier (130) et de la surface de joint opposée.

13. Ressort à gaz selon l'une quelconque des revendications précédentes, comportant en outre une soupape à gaz unidirectionnelle (15) agencée pour être reliée de ladite chambre primaire (101) à ladite chambre secondaire (126) lorsqu'elles sont fermées avec étanchéité l'une par rapport à l'autre.

14. Ressort à gaz selon la revendication 13, dans lequel ladite soupape à gaz unidirectionnelle (150) est fournie dans un arbre de piston (108) dudit ensemble piston (104).

15. Procédé de fabrication d'un ressort à gaz comportant les étapes suivantes :
fournir un logement (102) ;
monter un ensemble piston (104) dans ledit logement (102) de sorte qu'il puisse effectuer un mouvement de va-et-vient au moins partiellement à l'intérieur du logement (102) ;
dans lequel une chambre à gaz est formée à l'intérieur dudit logement (102) ; et
monter un joint prisonnier (130) à l'intérieur dudit logement (102) de telle sorte que sur une certaine plage de positions dudit ensemble piston (104), l'ensemble piston (104) sépare la chambre à gaz en une chambre primaire (101) et une chambre secondaire (126) isolées de manière étanche l'une par rapport à l'autre par un joint (130), alors qu'à d'autres positions, la chambre primaire (101) et la chambre secondaire (126) sont jointes de manière fluidique ;
**caractérisé en ce que** le joint prisonnier (130) comporte un élément d'étanchéité compressible (136) maintenu prisonnier dans le sens axial du mouvement de va-et-vient du piston à l'intérieur d'un logement de joint (132, 134) qui expose l'élément d'étanchéité (136) dans un sens radial à travers un jour (133) dans le logement de joint qui est plus petit que l'élément d'étanchéité (136).
